# EUROPÄISCHE PATENTSCHRIFT

(11) **EP 3 424 689 B1**
(45) Veröffentlichungstag und Bekanntmachung des Hinweises auf die Patenterteilung: **10.12.2025**
(21) Anmeldenummer: 18166215.6
(22) Anmeldetag: 09.04.2018
(51) Int. Cl.: B29D 22/02, B29C 71/02, B29C 45/00, B29L 31/00

(54) **VERFAHREN ZUR HERSTELLUNG EINES FALTENBALGS MIT GERINGER BAUHÖHE**
METHOD FOR MANUFACTURING A BELLOWS WITH LOW CONSTRUCTION HEIGHT
PROCÉDÉ DE FABRICATION D'UN SOUFFLET À PLIS À FAIBLE ENCOMBREMENT EN HAUTEUR

(30) Priorität: 28.06.2017 DE 102017210950
(43) Veröffentlichungstag der Anmeldung: 09.01.2019
(73) Patentinhaber: ContiTech Vibration Control GmbH, 30175 Hannover (DE)
(72) Erfinder: Thomalla, Robert, 29471 Gartow (DE); Weiss, Rolf, 29553 Bienenbüttel (DE)
(74) Vertreter: Preusser, Andrea

(56) Entgegenhaltungen:
- EP-A1- 2 735 420
- DE-A1- 102011 085 687
- JP-A- H03 199 036
- JP-A- H03 268 919
- JP-A- H04 173 226
- JP-A- S61 228 942
- US-A- 5 345 857
- US-A1- 2013 320 590

## Beschreibung

Die vorliegende Erfindung betrifft ein Verfahren zur Herstellung eines Faltenbalgs mit geringer Bauhöhe gemäß des Patentanspruchs 1 sowie einen Faltenbalg mit geringer Bauhöhe gemäß des Patentanspruchs 8.

Es sind heutzutage Sitze und insbesondere Fahrersitze für Fahrzeuge wie z.B. Personenkraftwagen (Pkw), Lastkraftwagen (Lkw), Busse und dergleichen bekannt, welche eine Massagefunktion aufweisen. Die Massagefunktion kann durch den Sitz selbst ausgeübt werden. Alternativ kann auch eine sog. Massagesitz-Auflage auf den Sitz gelegt werden.

In beiden Fällen wird die Massagefunktion dadurch realisiert, dass entweder in der Polsterung des Sitzes oder in der Massagesitz-Auflage PU-Matten (Polyurethan-Matten) mit aufgeschweißten Faltenbälgen vorhanden sind. Die Faltenbälge zeigen üblicherweise senkrecht von der PU-Matte weg und können mit Luftdruck versorgt werden, so dass die Faltenbälge durch eine Erhöhung des Luftdrucks eine Kraft auf z.B. den Rücken einer Person, welche den Sitz benutzt, ausüben können. Wird der Luftdruck reduziert, kehren die Faltenbälge wieder in ihre flachere Ausgangslage, d.h. in ihren Normalzustand, zurück.

Derartige Faltenbälge werden bisher üblicherweise dadurch hergestellt, dass einzelne Teilstücke aus einer Folie ausgestanzt und dann zusammengeschweißt werden. Die Verwendung von Folie hat dabei den Vorteil, dass sehr geringe Wanddicken der Faltenbälge erreicht werden können. Dies ist bei dieser Anwendung sehr vorteilhaft, weil die Faltenbälge sich in der Längsrichtung senkrecht zur PU-Matte deutlich auf eine Höhe von z.B. ca. 50 mm ausdehnen und wieder auf eine Höhe von ca. 8 mm im Normalzustand zusammenziehen können müssen. Aus dieser geringen Höhe von ca. 8 mm im zusammengezogenen Zustand resultiert das Erfordernis der dünnwandigen Falten, da diese geringe Höhe bzw. Bauhöhe des Faltenbalgs sonst nicht realisiert werden kann.

Nachteilig ist bei der Herstellung von derartigen Faltenbälgen aus zusammengeschweißten Folien, dass die Herstellungsschritte des Ausstanzens der Teilstücke aus Folie als Ringscheiben sowie als Scheibe für die Stirnseite und das anschließende Zusammenschweißen der Teilstücke zum Faltenbalg aufwendig sind. Hierdurch können entsprechende Kosten verursacht werden.

Nachteilig ist auch, dass diese Art der Herstellung fehleranfällig ist, da Undichtigkeiten des Faltenbalgs auftreten können, falls die Schweißnähte nicht korrekt ausgeführt werden. Dabei können fehlerhafte Schweißnähte durch die geringen Maße sowie durch die geringe Wandstärke der Teilstücke der Folie begünstigt werden.

Nachteilig ist ferner, dass derartig hergestellte Faltenbälge dazu neigen können, im aufgeblasenen Zustand Verformungen und bzw. oder Einfallstellen zu bilden, da durch das Ausstanzen von zweidimensionalen Teilstücken aus Folie und deren Zusammenschweißen die dreidimensionale Kontur des fertigen Faltenbalgs nur unzureichend ausgeformt werden kann.

Nachteilig ist des Weiteren, dass die verwendeten Folien üblicherweise glatt und rein zweidimensional ausgebildet sind. Somit können durch das Zusammenschweißen von Teilstücken von Folie lediglich Faltenbälge geschaffen werden, welche glatte Außensowie Innenoberflächen aufweisen. Dies beschränkt die Gestaltung von Faltenbälgen für derartige Anwendungen auf Faltenbälge mit glatten Außen- sowie Innenoberflächen.

Die JP H03 199036 A betrifft ein Verfahren zur Herstellung eines Faltenbalgs gemäß dem Oberbegriff des Anspruchs 1 und einen Faltenbalg gemäß dem Oberbegriff des Anspruchs 8. Hierbei wird zunächst eine längere Version des Faltenbalgs erstellt, welcher dann auf eine kürzere Länge komprimiert wird. Anschließend wir der Faltenbalg wärmebehandelt.

Die EP 2735420 A1 offenbart ein Spritzgusswerkzeug geeignet zur Herstellung eines Faltenbalgs.

Eine Aufgabe der vorliegenden Erfindung ist es, einen Faltenbalg der eingangs beschriebenen Art bereit zu stellen, welcher einfacher, schneller, kostengünstiger, sicherer und bzw. oder vielfältiger als bisher bekannt hergestellt werden kann. Zumindest soll eine Alternative zu bekannten Faltenbälgen mit geringer Bauhöhe bereitgestellt werden.

Die Aufgabe wird erfindungsgemäß durch ein Verfahren zur Herstellung eines Faltenbalgs mit geringer Bauhöhe mit den Merkmalen gemäß Patentanspruch 1 sowie durch einen Faltenbalg mit geringer Bauhöhe mit den Merkmalen des Patentanspruchs 8 gelöst. Vorteilhafte Weiterbildungen sind in den Unteransprüchen beschrieben.

Somit betrifft die vorliegende Erfindung ein Verfahren zur Herstellung eines Faltenbalgs mit geringer Bauhöhe geeignet zur Verwendung bei einem Sitz mit Massage-Funktion und bzw. oder bei einer Massagesitz-Auflage mit wenigstens den Schritten:
- Ausformen des Faltenbalgs mittels eines Spritzgussverfahrens mit einer ersten Höhe,
- Reduzieren des Faltenbalgs auf eine zweite Höhe, welche geringer als die erste Höhe ist, und
- Wärmebehandeln, vorzugsweise Tempern, des Faltenbalgs,
wobei die erste Höhe einem aufgeblasenen Faltenbalg und die zweite Höhe einem unbelasteten Faltenbalg entspricht. Der Schritt des Ausformens des Faltenbalgs erfolgt mit einem Spritzgusswerkzeug, so dass auf der Innenseite und bzw. oder auf der Außenseite des Faltenbalgs zumindest abschnittsweise wenigstens eine Erhebung und bzw. oder wenigstens eine Vertiefung ausgeformt wird. Hierdurch kann eine zumindest abschnittsweise Beabstandung der einander zugewandten Seiten der Falten bzw. der Ringscheiben des Faltenbalgs erreicht bzw. ein aneinander Anliegen vermieden werden, was sonst zu einem aneinander kleben und bzw. oder zu einer Geräuschbildung beim voneinander Lösen führen kann. Dies könnte die Funktionsweise beeinträchtigen bzw. die Geräusche könnten den Benutzer irritieren und bzw. oder stören.

Der vorliegenden Erfindung liegt dabei die Erkenntnis zugrunde, dass ein Faltenbalg zunächst in einer ausgezogenen Länge mittels eines Spritzgussverfahrens einstückig gefertigt werden kann, so dass dieses erprobte, bekannte und kostengünstige Verfahren zur Herstellung des Faltenbalgs verwendet werden kann. Die Falten bzw. Ringscheiben des Faltenbalgs können dabei beim Auszug über den Formkern, d.h. die Innenform des Spritzgusswerkzeugs, gleiten, so dass sich der Faltenbalg leicht aus der Spritzgussform entnehmen lassen kann.

Anschließend kann der Faltenbalg in der geringeren Höhe, welche er später im Betrieb im zusammengezogenen Normalzustand aufweisen soll, wärmebehandelt werden, damit der Faltenbalg in diesem Zustand in dieser zweiten Höhe als Bauhöhe fixiert werden kann. Hierdurch kann ein Faltenbalg, dessen zweite Höhe zu gering sein kann, um durch ein Spritzgussverfahren direkt hergestellt zu werden, dennoch mittels eines Spritzgussverfahrens hergestellt werden. Dies kann gegenüber dem bisher bekannten Ausschneiden und Zusammenschweißen von Teilstücken aus Folie eine deutliche Zeitersparnis sowie Vereinfachung der Herstellungsschritte bedeuten.

Vorteilhaft ist weiterhin, dass die Fehleranfälligkeit von Faltenbälgen, welche durch zusammengeschweißte Teilstücke aus Folien hergestellt werden, vollständig behoben werden kann, da auf das Schweißen verzichtet werden kann.

Vorteilhaft ist auch, dass die dreidimensionale Kontur des Faltenbalgs auch dreidimensional hergestellt werden kann. Dies kann Verformungen und bzw. oder Einfallstellen, wie sie bei zusammengeschweißten zweidimensionalen Teilstücken aus Folien auftreten können, vermeiden.

Vorteilhaft ist des Weiteren, dass mittels eines Spritzgussverfahrens durch eine entsprechende Spritzgussform bzw. durch ein entsprechendes Spritzgusswerkzeug auch dreidimensionale Gestaltungen des Faltenbalgs bzw. seiner Oberflächen geschaffen werden können, was bei der Verwendung von Teilstücken zweidimensionaler Folien nicht möglich ist. Somit kann ein mittels eines Spritzgussverfahrens hergestellter Faltenbalg vielfältiger gestaltet werden als die bisher bekannten Faltenbälge.

Gemäß einem Aspekt der vorliegenden Erfindung wird der Faltenbalg aus einem thermoplastischen Material, vorzugsweise aus einem thermoplastischen Polyurethan, ausgeformt. Hierdurch kann es ermöglicht werden, dass der Faltenbalg mittels eines Spritzgussverfahrens mit einer ersten größeren Höhe ausgeformt und anschließend auf seine endgültige unbelastete geringere Höhe gebracht und in dieser Höhe thermisch fixiert wird.

Gemäß einem weiteren Aspekt der vorliegenden Erfindung erfolgt der Schritt des Reduzierens des Faltenbalgs auf die zweite Höhe dadurch, dass der Faltenbalg zwischen wenigstens zwei Begrenzungselementen angeordnet wird. Hierdurch kann die Einstellung der zweiten geringeren Höhe während der Wärmebehandlung auf einfache Art und Weise erfolgen. Insbesondere kann diese Fixierung einfach und schnell vorgenommen und auch wieder aufgehoben werden, was den Zeitaufwand für diesen Schritt gering halten kann.

Gemäß einem weiteren Aspekt der vorliegenden Erfindung wird der Faltenbalg zwischen wenigstens zwei vorformungssteifen Platten angeordnet. Hierdurch kann die o.g. Fixierung einfach umgesetzt werden.

Gemäß einem weiteren Aspekt der vorliegenden Erfindung weist die Innenseite und bzw. oder die Außenseite des Faltenbalgs zumindest abschnittsweise wenigstens eine Erhebung, vorzugsweise eine Mehrzahl von Erhebungen, auf, welche als Rippe, vorzugsweise als radiale Rippe, ausgebildet ist. Hierdurch kann eine Kontaktvermeidung und bzw. oder eine Abfuhrmöglichkeit der Luft zwischen den Falten bzw. Ringscheiben des Faltenbalgs über eine größere Strecke erfolgen. Die Ausbildung als radiale Rippe kann die Luft zwischen den Falten bzw. zwischen den Ringscheiben des Faltenbalgs nach außen abführen, um insbesondere Geräusche zu vermeiden. Durch die Anzahl, Ausgestaltung und bzw. oder Anordnung der Rippen kann deren Wirkung an die jeweilige Anwendung angepasst werden.

Gemäß einem weiteren Aspekt der vorliegenden Erfindung weist die Innenseite und bzw. oder die Außenseite des Faltenbalgs zumindest abschnittsweise wenigstens eine Erhebung, vorzugsweise eine Mehrzahl von Erhebungen, auf, welche als Halbkugel ausgebildet ist. Hierdurch können Erhebungen mit sehr einfacher geometrisch ausgebildet werden, um eine punktuelle Beabstandung der Falten bzw. der Ringscheiben des Faltenbalgs zu erreichen. Durch die Anzahl, Ausgestaltung und bzw. oder Anordnung der Halbkugeln kann deren Wirkung an die jeweilige Anwendung angepasst werden.

Gemäß einem weiteren Aspekt der vorliegenden Erfindung ist die wenigstens eine Erhebung und bzw. oder die wenigstens eine Vertiefung an den Ringscheiben des Faltenbalgs und bzw. oder an der Stirnfläche des Faltenbalgs angeordnet. Durch die Anordnung an den Falten bzw. an den Ringscheiben kann ein Kontakt dort vermieden werden, wie zuvor beschrieben. Durch eine Anordnung an der Stirnfläche bzw. Stirnseite kann die Kontaktfläche z.B. zu einem Benutzer hin beeinflusst werden, so dass z.B. eine Massagefunktion beeinflusst werden kann.

Die vorliegende Erfindung betrifft auch einen Faltenbalg mit geringer Bauhöhe geeignet zur Verwendung bei einem Sitz mit Massage-Funktion und bzw. oder bei einer Massagesitz-Auflage. Der Faltenbalg ist mittels eines Spritzgussverfahrens mit einer ersten Höhe ausgeformt, auf eine zweite Höhe, welche geringer als die erste Höhe ist, reduziert und wärmebehandelt, vorzugsweise getempert, wobei die erste Höhe einem aufgeblasenen Faltenbalg und die zweite Höhe einem unbelasteten Faltenbalg entspricht. Die Innenseite und bzw. oder die Außenseite des Faltenbalgs weist zumindest abschnittsweise wenigstens eine Erhebung und bzw. oder wenigstens eine Vertiefung auf. Als ein derartiges Verfahren kann vorzugsweise das zuvor beschrieben erfindungsgemäße Verfahren verwendet werden. Die diesbezüglichen Vorteile wurden bei dem erfindungsgemäßen Verfahren bereits beschrieben und sollen hier nicht wiederholt werden.

Gemäß einem weiteren Aspekt der vorliegenden Erfindung wurde der Faltenbalg aus einem thermoplastischen Material, vorzugsweise aus einem thermoplastischen Polyurethan, ausgeformt. Die diesbezüglichen Vorteile wurden bei dem erfindungsgemäßen Verfahren bereits beschrieben und sollen hier nicht wiederholt werden.

Gemäß einem weiteren Aspekt der vorliegenden Erfindung weist
Gemäß einem weiteren Aspekt der vorliegenden Erfindung weist die Innenseite und bzw. oder die Außenseite des Faltenbalgs zumindest abschnittsweise wenigstens eine Erhebung, vorzugsweise eine Mehrzahl von Erhebungen, auf, welche als Rippe, vorzugsweise als radiale Rippe, ausgebildet ist. Die diesbezüglichen Vorteile wurden bei dem erfindungsgemäßen Verfahren bereits beschrieben und sollen hier nicht wiederholt werden.

Gemäß einem weiteren Aspekt der vorliegenden Erfindung weist die Innenseite und bzw. oder die Außenseite des Faltenbalgs zumindest abschnittsweise wenigstens eine Erhebung, vorzugsweise eine Mehrzahl von Erhebungen, auf, welche als Halbkugel ausgebildet ist. Die diesbezüglichen Vorteile wurden bei dem erfindungsgemäßen Verfahren bereits beschrieben und sollen hier nicht wiederholt werden.

Gemäß einem weiteren Aspekt der vorliegenden Erfindung ist die wenigstens eine Erhebung und bzw. oder die wenigstens eine Vertiefung an den Ringscheiben des Faltenbalgs und bzw. oder an der Stirnfläche des Faltenbalgs angeordnet. Die diesbezüglichen Vorteile wurden bei dem erfindungsgemäßen Verfahren bereits beschrieben und sollen hier nicht wiederholt werden.

Ein Ausführungsbeispiel und weitere Vorteile der Erfindung werden nachstehend im Zusammenhang mit den folgenden Figuren erläutert. Darin zeigt:
- Figur 1: eine schematische Schnittdarstellung eines erfindungsgemäßen Spritzgusswerkzeugs;
- Figur 2: eine schematische Schnittdarstellung eines erfindungsgemäßen Faltenbalgs in einer ersten Höhe;
- Figur 3: eine schematische Schnittdarstellung des erfindungsgemäßen Faltenbalgs in einem Wärmebehandlungswerkzeug in einer zweiten Höhe; und
- Figur 4: ein Ablaufdiagramm eines erfindungsgemäßen Verfahrens.

Die Beschreibung der o.g. Figuren erfolgt in zylindrischen Koordinaten mit einer vertikalen Richtung Z, welche auch als Höhe Z bezeichnet werden kann. Senkrecht zur Achse der vertikalen Richtung Z erstreckt sich eine radiale Richtung R.

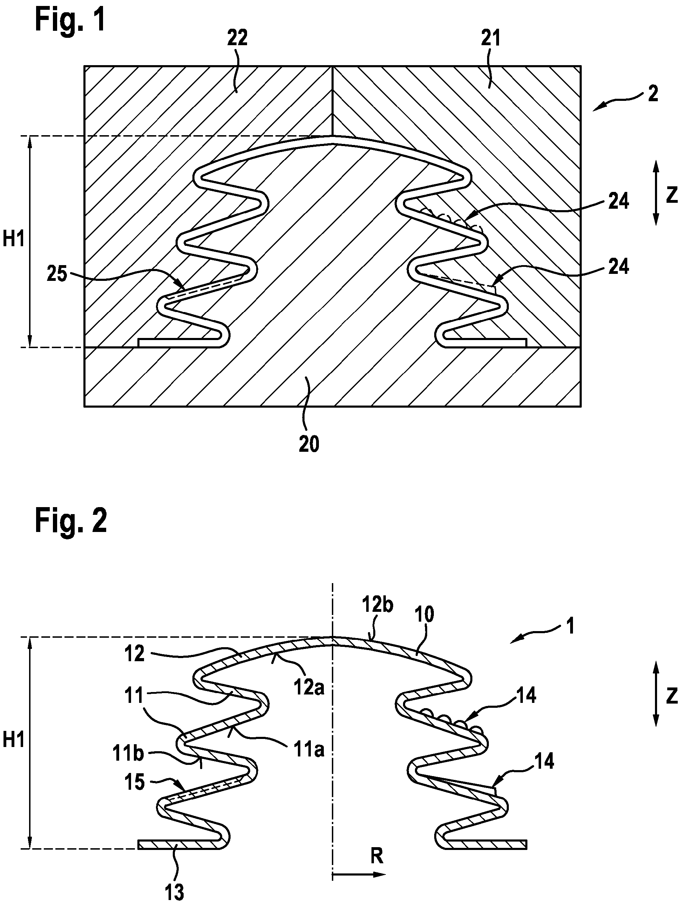

Figur 1 zeigt eine schematische Schnittdarstellung eines erfindungsgemäßen Spritzgusswerkzeugs 2, welches unten eine Innenform 20 aufweist, welche auch als Formkern 20 bezeichnet werden kann. Oben weist das Spritzgusswerkzeug 2 eine erste Außenform 21 und eine zweite Außenform 22 auf, welche die Innenform 20 derart umschließen, dass zwischen den Innenseiten der Außenformen 21, 22 und der Außenseite der Innenform 20 ein Hohlraum gebildet wird. In diesen Hohlraum kann ein thermoplastisches Polyurethan als Spritzgussmaterial über eine Einfüllöffnung (nicht dargestellt) eingespritzt werden, um einen Faltenbalg 1 mit einer ersten Höhe H1 auszubilden.

Figur 2 zeigt eine schematische Schnittdarstellung eines erfindungsgemäßen Faltenbalgs 1 in einer ersten Höhe H1, wie er mit dem Spritzgusswerkzeug 2 der Figur 1 ausgebildet werden kann. Der Faltenbalg 1 weist einen Faltenbalgkörper 10 mit, von oben nach unten betrachtet, einer Stirnfläche 12 bzw. einer Stirnseite 12 auf, an der sich nach unten eine Mehrzahl von Falten anschließen, welche durch Ringscheiben 11 gebildet werden. Die unterste Ringscheibe 11 schließt an eine horizontal ausgerichtete Bodenfläche 13 an, welche auch als Befestigungsring 13 bezeichnet werden kann. Die Stirnfläche 12 weist nach unten eine Innenseite 12a und nach oben eine Außenseite 12b auf. Die Ringscheiben 11 weisen nach innen eine Innenseite 11a und nach außen eine Außenseite 11b auf.

Optional können z.B. auf der Außenseite 11b der Ringscheiben 11 Erhebungen 14 z.B. in Form von radialen Rippen 14 und bzw. oder in Form von Halbkugeln 14 angeordnet sein, welche durch entsprechende Vertiefungen 24 der Außenformen 21, 22 des Spritzgusswerkzeugs 2 ausgeformt werden können. Ebenfalls optional können alternativ oder zusätzlich Vertiefungen 15 z.B. in Form von Nuten 15 z.B. auf der Außenseite 11b der Ringscheiben 11 angeordnet sein, welche durch entsprechende Erhebungen 25 der Außenformen 21, 22 des Spritzgusswerkzeugs 2 ausgeformt werden können. Hierdurch kann ein Kontakt zwischen den einander zugewandten Ringscheiben 11 bzw. gegenüber der Stirnfläche 12 und bzw. oder gegenüber der Bodenfläche 13 verhindert oder zumindest reduziert werden, um z.B. hierdurch verursachte Geräusche zu vermeiden oder zumindest zu reduzieren. Die Erhebungen 14 und bzw. oder Vertiefungen 15 könnten zu diesem Zweck auf der Innenseite 11a der Ringscheiben 11 angeordnet sein.

Optional können derartige Erhebungen 14 und bzw. oder Vertiefungen 15 alternativ oder zusätzlich auch auf der Außenseite 12b der Stirnfläche 12 angeordnet sein (nicht dargestellt). Hierdurch kann z.B. die Wirkung der Außenseite 12a der Stirnfläche 12 z.B. bei einer Verwendung bei einem Sitz mit Massage-Funktion und bzw. oder bei einer Massagesitz-Auflage beeinflusst werden. Die Erhebungen 14 und bzw. oder Vertiefungen 15 könnten zu diesem Zweck auf der Innenseite 12a der Stirnfläche 12 angeordnet sein.

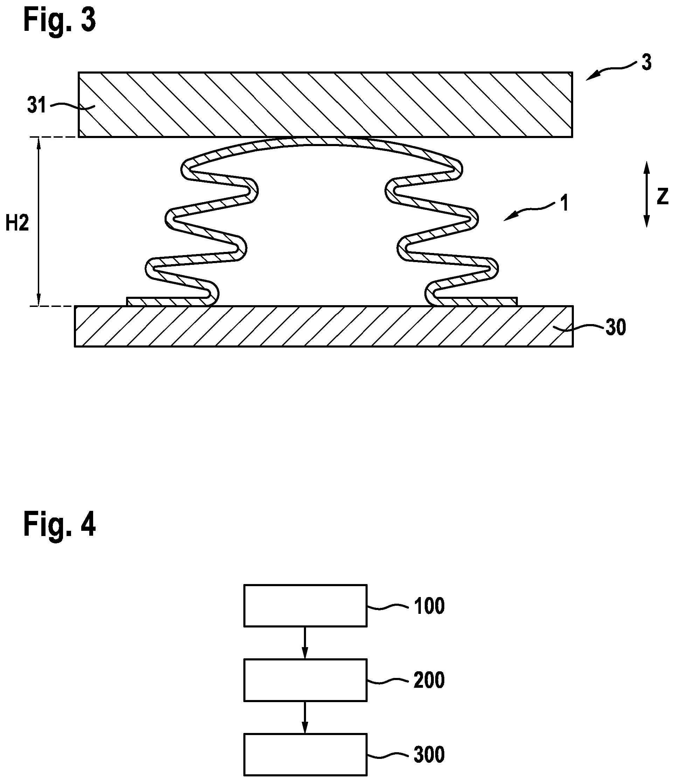

Figur 3 zeigt eine schematische Schnittdarstellung des erfindungsgemäßen Faltenbalgs 1 in einem Wärmebehandlungswerkzeug 3 in einer zweiten Höhe H2. In dieser Darstellung ist der Faltenbalg 1, welcher in dem Spritzgusswerkzeug 2 der Figur 1 wie in Figur 2 dargestellt hergestellt wurden, zwischen einem ersten Begrenzungselement 30 und einen zweiten Begrenzungselement 31 des Wärmebehandlungswerkzeugs 3 in einer Höhe H2 eingeklemmt, welche geringer als die erste Höhe H1 ist, mit der der Faltenbalg 1 im Spritzgusswerkzeug 2 hergestellt wurde. Die beiden Begrenzungselemente 30, 31 sind als Platten 30, 31 ausgebildet. In dieser Anordnung der Figur 3 wird der Faltenbalg 1 mittels Tempern wärmebehandelt, so dass das Material des Faltenbalgs 1 in der zweiten Höhe H2 fixiert wird. Die zweite Höhe H2 wird hierdurch zur Bauhöhe H2 des Faltenbalgs 1, d.h. zur Höhe H2 im unbelasteten Normalzustand des Faltenbalgs 1.

Hierdurch kann erfindungsgemäß ein Faltenbalg 1 zwar mittels eines Spritzgussverfahrens mit einer ersten Höhe H1 hergestellt werden, jedoch kann der fertige Faltenbalg 1 durch das Tempern auf der zweiten geringeren Höhe H2 als Bauhöhe H2 vergleichsweise flach bzw. mit einer vergleichsweise geringen Höhe H2 fertiggestellt werden. Dies kann z.B. für Anwendungen wie bei einem Sitz mit Massage-Funktion und bzw. oder bei einer Massagesitz-Auflage vorteilhaft sein.

Figur 4 zeigt ein Ablaufdiagramm eines erfindungsgemäßen Verfahrens. In einem ersten Schritt 100 wird der Faltenbalg 1 mittels eines Spritzgussverfahrens in dem Spritzgusswerkzeug 2 gemäß der Figur 1 mit der ersten Höhe H1 ausgeformt, wie in der Figur 2 dargestellt. Anschließend wird in einem zweiten Schritt 200 der Faltenbalg 1 auf die zweite Höhe H2 reduziert, welche geringer als die erste Höhe H1 ist. Dies geschieht über das Anordnen zwischen den beiden Platten 30, 31 des Wärmebehandlungswerkzeugs 3, wie in der Figur 3 dargestellt. In dieser Anordnung erfolgt als dritter Schritt 300 ein Wärmebehandeln in Form eines Temperns des Faltenbalgs 1, so dass die Form des Faltenbalgs 1 in der zweiten geringeren Höhe H2 als Bauhöhe H2 des Normalzustands des Faltenbalgs 1 festgelegt wird. Der getemperte Faltenbalg 1 weist eine deutliche Rückstellkraft auf, welche ihn insbesondere in der Höhe Z in diesen Normalzustand mit der Bauhöhe H2 zurückstellen möchte.

Die vorliegende Erfindung ist dabei generell auf Kissen und Bälge anwendbar, welche z.B. durch Luftdruck verformt werden sollen. Besonders geeignet ist die vorliegende Erfindung jedoch für Faltenbälge 1 mit einer geringen Bauhöhe H2.

### Bezugszeichenliste (Teil der Beschreibung)

- H1: erste Höhe in der vertikalen Richtung Z
- H2: zweite Höhe bzw. Bauhöhe in der vertikalen Richtung Z
- R: radiale Richtung
- Z: vertikale Richtung; Höhe

- 1: Faltenbalg
- 10: Faltenbalgkörper
- 11: Ringscheiben
- 11a: Innenseite der Ringscheiben 11
- 11b: Außenseite der Ringscheiben 11
- 12: Stirnfläche; Stirnseite
- 12a: Innenseite der Stirnfläche 12
- 12b: Außenseite der Stirnfläche 12
- 13: Bodenfläche; Befestigungsring
- 14: Erhebung; (radiale) Rippe; Halbkugel
- 15: Vertiefung; Nut

- 2: Spritzgusswerkzeug
- 20: Innenform
- 21: erste Außenform
- 22: zweite Außenform
- 24: Vertiefung zur Ausformung einer Erhebung 14
- 25: Erhebung zur Ausformung einer Vertiefung 15

- 3: Wärmebehandlungswerkzeug
- 30: erstes Begrenzungselement bzw. erste Platte
- 31: zweites Begrenzungselement bzw. zweite Platte

- 100: Ausformen des Faltenbalgs 1 mittels Spritzgussverfahren mit erster Höhe H1
- 200: Reduzieren des Faltenbalgs 1 auf zweite Höhe H2
- 300: Wärmebehandeln bzw. Tempern des Faltenbalgs 1

## Patentansprüche

1. Verfahren zur Herstellung eines Faltenbalgs (1) mit geringer Bauhöhe (H2) geeignet zur Verwendung bei einem Sitz mit Massage-Funktion und/oder bei einer Massagesitz-Auflage mit wenigstens den Schritten:
• Ausformen (100) des Faltenbalgs (1) mittels eines Spritzgussverfahrens mit einer ersten Höhe (H1),
• Reduzieren (200) des Faltenbalgs (1) auf eine zweite Höhe (H2), welche geringer als die erste Höhe (H1) ist, und
• Wärmebehandeln (300), vorzugsweise Tempern (300), des Faltenbalgs (1), wobei die erste Höhe (H1) einem aufgeblasenen Faltenbalg (1) und die zweite Höhe (H2) einem unbelasteten Faltenbalg (2) entspricht,
**dadurch gekennzeichnet, dass**
der Schritt des Ausformens (100) des Faltenbalgs (1) mit einem Spritzgusswerkzeug (2) erfolgt, so dass auf der Innenseite (11a, 12a) und/oder auf der Außenseite (11b, 12b) des Faltenbalgs (1) zumindest abschnittsweise wenigstens eine Erhebung (14) und/oder wenigstens eine Vertiefung (15) ausgeformt wird..

2. Verfahren nach Anspruch 1, **dadurch gekennzeichnet, dass** der Faltenbalg (1) aus einem thermoplastischen Material, vorzugsweise aus einem thermoplastischen Polyurethan, ausgeformt wird.

3. Verfahren nach Anspruch 1 oder 2, **dadurch gekennzeichnet, dass** der Schritt des Reduzierens (200) des Faltenbalgs (1) auf die zweite Höhe (H2) dadurch erfolgt, dass der Faltenbalg (1) zwischen wenigstens zwei Begrenzungselementen (30, 31) angeordnet wird.

4. Verfahren nach Anspruch 3, **dadurch gekennzeichnet, dass** der Faltenbalg (1) zwischen wenigstens zwei verformungssteifen Platten (30, 31) angeordnet wird.

5. Verfahren nach einem der Ansprüche 1 bis 4, **dadurch gekennzeichnet, dass** die Innenseite (11a, 12a) und/oder die Außenseite (11b, 12b) des Faltenbalgs (1) zumindest abschnittsweise wenigstens eine Erhebung (14), vorzugsweise eine Mehrzahl von Erhebungen (14), aufweist, welche als Rippe (15), vorzugsweise als radiale Rippe (15), ausgebildet ist.

6. Verfahren nach einem der Ansprüche 1 bis 5, **dadurch gekennzeichnet, dass** die Innenseite (11a, 12a) und/oder die Außenseite (11b, 12b) des Faltenbalgs (1) zumindest abschnittsweise wenigstens eine Erhebung (14), vorzugsweise eine Mehrzahl von Erhebungen (14), aufweist, welche als Halbkugel (14) ausgebildet ist.

7. Verfahren nach einem der Ansprüche 1 bis 6, **dadurch gekennzeichnet, dass** die wenigstens eine Erhebung (14) und/oder die wenigstens eine Vertiefung (15) an den Ringscheiben (11) des Faltenbalgs (1) und/oder an der Stirnfläche (12) des Faltenbalgs (1) angeordnet ist.

8. Faltenbalg (1) mit geringer Bauhöhe (H2) geeignet zur Verwendung bei einem Sitz mit Massage-Funktion und/oder bei einer Massagesitz-Auflage, wobei der Faltenbalg (1) mittels eines Spritzgussverfahrens mit einer ersten Höhe (H1) ausgeformt, auf eine zweite Höhe (H2), welche geringer als die erste Höhe (H1) ist, reduziert und wärmebehandelt, vorzugsweise getempert,
wurde,
wobei die erste Höhe (H1) einem aufgeblasenen Faltenbalg (1) und die zweite Höhe (H2) einem unbelasteten Faltenbalg (2) entspricht,
**dadurch gekennzeichnet, dass**
die Innenseite (11a, 12a) und/oder die Außenseite (11b, 12b) des Faltenbalgs (1) zumindest abschnittsweise wenigstens eine Erhebung (14) und/oder wenigstens eine Vertiefung (15) aufweist.

9. Faltenbalg (1) nach Anspruch 8, **dadurch gekennzeichnet, dass** der Faltenbalg (1) aus einem thermoplastischen Material, vorzugsweise aus einem thermoplastischen Polyurethan, ausgeformt wurde.

10. Faltenbalg (1) nach einem der Ansprüche 8 bis 9, **dadurch gekennzeichnet, dass** die Innenseite (11a, 12a) und/oder die Außenseite (11b, 12b) des Faltenbalgs (1) zumindest abschnittsweise wenigstens eine Erhebung (14), vorzugsweise eine Mehrzahl von Erhebungen (14), aufweist, welche als Rippe (14), vorzugsweise als radiale Rippe (14), ausgebildet ist.

11. Faltenbalg (1) nach einem der Ansprüche 8 bis 10, **dadurch gekennzeichnet, dass** die Innenseite (11a, 12a) und/oder die Außenseite (11b, 12b) des Faltenbalgs (1) zumindest abschnittsweise wenigstens eine Erhebung (14), vorzugsweise eine Mehrzahl von Erhebungen (14), aufweist, welche als Halbkugel (14) ausgebildet ist.

12. Faltenbalg (1) nach einem der Ansprüche 8 bis 11, **dadurch gekennzeichnet, dass** die wenigstens eine Erhebung (14) und/oder die wenigstens eine Vertiefung (15) an den Ringscheiben (11) des Faltenbalgs (1) und/oder an der Stirnfläche (12) des Faltenbalgs (1) angeordnet ist.

## Claims

1. Method for making a bellows (1) with a low overall height (H2) suitable for use with a seat with a massage function and/or with a massage seat support with at least the following steps:
• forming (100) of the bellows (1) by means of an injection moulding process with a first height (H1),
• Reduce (200) of the bellows (1) to a second height (H2) which is less than the first height (H1), and
• heat treating (300), preferably annealing (300), bellows (1),
wherein the first height (H1) corresponds to an inflated bellows (1) and the second height (H2) to an unloaded bellows (2),
**characterized in that**
the step of shaping (100) of the bellows (1) is carried out with an injection moulding tool (2) so that on the inside (11a, 12a) and/or on the outside (11b, 12b) of the bellows (1) at least one elevation (14) and/or at least one depression (15) is formed, at least in sections.

2. The method of claim 1, **characterized in that**
the bellows (1) is formed from a thermoplastic material, preferably a thermoplastic polyurethane.

3. The method of claim 1 or 2, **characterized in that**
the step of reducing (200) the bellows (1) to the second height (H2) is carried out by placing the bellows (1) between at least two boundaryelements (30, 31).

4. The method of claim 3, **characterized in that**
the bellows (1) is arranged between at least two deformation-resistant plates (30, 31).

5. method according to any one of claims 1 to 4, **characterised in that** the inside (11a, 12a) and/or the outside (11b, 12b) of the bellows (1) has at least one elevation (14) in sections, preferably a plurality of protrusions (14), which is formed as a rib (15), preferably as a radial rib (15).

6. method according to any one of claims 1 to 5, **characterised in that** the inside (11a, 12a) and/or the outside (11b, 12b) of the bellows (1) has at least one elevation (14) in sections, preferably a plurality of protrusions (14), which is formed as a hemisphere (14).

7. method according to any one of claims 1 to 6, **characterised in that** which is arranged at least one elevation (14) and/or at least one depression (15) at the annular discs (11) of the bellows (1) and/or at the end surface (12) of the bellows (1).

8. Bellows (1) with low overall height (H2) suitable for use with a seat with massage function and/or with a massage seat support, wherein
Bellows (1)
moulded by means of an injection moulding process with a first height (H1), to a second height (H2), which is less than the first height (H1) and heat-treated, preferably annealed,
became
wherein the first height (H1) corresponds to an inflated bellows (1) and the second height (H2) to an unloaded bellows (2),
**characterized in that**
the inside (11a, 12a) and/or the outside (11b, 12b) of the bellows (1) has at least one elevation (14) and/or at least one depression (15) at least in sections.

9. Bellows (1) according to claim 8, **characterized in that**
the bellows (1) has been moulded from a thermoplastic material, preferably a thermoplastic polyurethane.

10. bellows (1) according to any one of claims 8 to 9, **characterized in that** the inside (11a, 12a) and/or the outside (11b, 12b) of the bellows (1) has at least one elevation (14) in sections, preferably a plurality of protrusions (14), which is formed as a rib (14), preferably as a radial rib (14).

11. bellows (1) according to any one of claims 8 to 10, **characterised in that** the inside (11a, 12a) and/or the outside (11b, 12b) of the bellows (1) has at least one elevation (14) in sections, preferably a plurality of protrusions (14), which is formed as a hemisphere (14).

12. bellows (1) according to any one of claims 8 to 11, **characterised in that** which is arranged at least one elevation (14) and/or at least one depression (15) at the annular discs (11) of the bellows (1) and/or at the end surface (12) of the bellows (1).

## Revendications

1. Procédé de fabrication d'un soufflet (1) de faible hauteur totale (H2) pouvant être utilisé avec un siège doté d'une fonction de massage et/ou avec un support de siège de massage avec au moins les étapes suivantes :
• formage (100) du soufflet (1) au moyen d'un procédé de moulage par injection avec une première hauteur (H1),
• Réduire (200) le soufflet (1) à une seconde hauteur (H2) inférieure à la première hauteur (H1), et
• traitement thermique (300), recuit de préférence (300), soufflets (1),
dans laquelle la première hauteur (H1) correspond à un soufflet gonflé (1) et la seconde hauteur (H2) à un soufflet non chargé (2),
**caractérisé en ce que**
L'étape de façonnage (100) du soufflet (1) est réalisée à l'aide d'un outil de moulage par injection (2) de sorte qu'à l'intérieur (1 1A, 12A) et/ou à l'extérieur (11B, 12B) du soufflet (1) au moins une élévation (14) et/ou au moins une dépression (15) se forme, au moins en sections.

2. Procédé selon la revendication 1, **caractérisé en ce que**
Le soufflet (1) est formé d'un matériau thermoplastique, de préférence un polyuréthane thermoplastique.

3. Procédé selon la revendication 1 ou 2, **caractérisé en ce que**
l'étape de réduction (200) du soufflet (1) à la seconde hauteur (H2) est réalisée en plaçant le soufflet (1) entre au moins deux éléments de limite(30, 31).

4. Procédé selon la revendication 3, **caractérisé en ce que**
Le soufflet (1) est disposé entre au moins deux plaques résistantes à la déformation (30, 31).

5. procédé selon l'une quelconque des revendications 1 à 4, **caractérisé en ce que** L'intérieur (11a, 12a) et/ou l'extérieur (11b, 12b) du soufflet (1) présente au moins une élévation (14) en sections, de préférence une pluralité de saillies (14), qui est formée comme une nervure (15), de préférence comme une nervure radiale (15).

6. procédé selon l'une quelconque des revendications 1 à 5, **caractérisé en ce que** L'intérieur (11a, 12a) et/ou l'extérieur (11b, 12b) du soufflet (1) présente au moins une élévation (14) de sections, de préférence une pluralité de protubérances (14), qui est formée comme un hémisphère (14).

7. procédé selon l'une quelconque des revendications 1 à 6, **caractérisé en ce que** qui est disposé d'au moins une élévation (14) et/ou d'au moins une dépression (15) au niveau des disques annulaires (11) du soufflet (1) et/ou de la surface d'extrémité (12) du soufflet (1).

8. Soufflet (1) de faible hauteur totale (H2) adapté à une utilisation avec un siège avec fonction de massage et/ou avec un support de siège de massage, dans lequel
Soufflet (1)
moulé au moyen d'un procédé de moulage par injection avec une première hauteur (H1),
à une deuxième hauteur (H2), qui est inférieure à la première hauteur (H1) et traités thermiquement, de préférence recuits,
Devint
dans laquelle la première hauteur (H1) correspond à un soufflet gonflé (1) et la seconde hauteur (H2) à un soufflet non chargé (2),
**caractérisé en ce que**
L'intérieur (11a, 12a) et/ou l'extérieur (11b, 12b) du soufflet (1) présente au moins une élévation (14) et/ou au moins une dépression (15) au moins par sections.

9. Soufflet (1) selon la revendication 8, **caractérisé en ce que** Le soufflet (1) a été moulé à partir d'un matériau thermoplastique, de préférence un polyuréthane thermoplastique.

10. soufflet (1) selon l'une quelconque des revendications 8 à 9, **caractérisé en ce que** L'intérieur (11a, 12a) et/ou l'extérieur (11b, 12b) du soufflet (1) présente au moins une élévation (14) de sections, de préférence une pluralité de saillies (14), qui est formée d'une nervure (14), de préférence d'une nervure radiale (14).

11. soufflet (1) selon l'une quelconque des revendications 8 à 10, **caractérisé en ce que** L'intérieur (11a, 12a) et/ou l'extérieur (11b, 12b) du soufflet (1) présente au moins une élévation (14) de sections, de préférence une pluralité de protubérances (14), qui est formée comme un hémisphère (14).

12. soufflet (1) selon l'une quelconque des revendications 8 à 11, **caractérisé en ce que** qui est disposé d'au moins une élévation (14) et/ou d'au moins une dépression (15) au niveau des disques annulaires (11) du soufflet (1) et/ou de la surface d'extrémité (12) du soufflet (1).
